# EUROPEAN PATENT APPLICATION

(11) **EP 2 113 726 A1**
(43) Date of publication of application: **04.11.2009**
(21) Application number: 08155273.9
(22) Date of filing: 28.04.2008
(51) Int. Cl.: F24F 12/00, F24F 3/147, F04D 29/30, F04D 29/28

(54) **A ventilating arrangement**

(71) Applicant: Östberg, Hans, 774 35 Avesta (SE)
(72) Inventor: Östberg, Hans, 774 35 Avesta (SE)
(74) Representative: Olsson, Jan

(57) **Abstract**

An arrangement for ventilating one or more rooms in a building comprises a casing (7) having at least four openings arranged on the same side (12) thereof for conducting exhaust air from the rooms of the building as well as supply air from the exterior to said rooms of the building through a rotary heat exchanger (26) arranged inside said casing. Fan members (21, 23) are arranged inside said casing for creating air flows through the casing. The impeller of at least one of said fan members has blades curved backwards with respect to the rotation direction of the impeller.

## Description

### TECHNICAL FIELD OF THE INVENTION AND PRIOR ART

The present invention relates to an arrangement for ventilating one or more rooms of a building according to the preamble of appended claim 1.

Such arrangements may be used in all types of buildings for obtaining heat transfer between the flows of supply air to rooms of the building and the flow of exhaust air from the rooms of the building. These arrangements are then mostly used for recovering energy by transfer of heat from the warmer exhaust air to the colder supply air before this is supplied to the rooms of the building, but it is also possible to use an arrangement of this type for transferring heat in the opposite direction for lowering the temperature of supply air before this is supplied to the rooms of the building during hotter seasons or in warmer regions of the earth.

This type of arrangements having said four openings arranged on the same side are used where it is suitable to have all connections thereto on one side of the casing. This may be due to a restricted available space for the arrangement or a desire to have said conduits, i.e. ventilation pipes, extending in only one direction away from said casing. These arrangements are then mostly intended to be arranged with said side on the top and are then mostly called ventilating arrangements with top connection. When arranging such a ventilating arrangement with the casing secured to a wall in a said room close to the ceiling thereof, this means that the ventilating pipes may be led to the ceiling and further to different rooms of the building or to the exterior while being hidden as much as possible.

A heat exchanger in the form of a rotary heat exchanger in such a ventilating arrangement is preferred, since a rotary heat exchanger has a high efficiency and it avoids problems with ice formation during the winter as would have been the case when using for instance a plate heat exchanger. Thus, it is for a ventilating arrangement of this type not necessary to provide any automatic defrosting function.

An arrangement of this type has often to be located where restricted place is available or there is for other reasons desired to keep the dimensions of the casing thereof within restricted limits, so that the casing often has to have determined outer dimensions.

There is an ongoing attempt to improve ventilating arrangements of this type with respect to efficiency, noise level etc. Said determined dimensions of the casing make these attempts rather tricky. For example the efficiency of the rotary heat exchanger is increased with an increased diameter and depth thereof. However, said fan members have to be designed to be able to obtain a certain air flow rate, in which the power needed for said fan members is among others depending upon the cross-sections of the air flow paths inside said casing.

### SUMMARY OF THE INVENTION

The object of the present invention is to provide a ventilating arrangement of the type defined in the introduction which is to at least some extent improved with respect to such arrangements already known.

This object is according to the invention obtained by providing such an arrangement, in which the impeller of at least on of said fan members has blades curved backwards with respect to the rotation direction of the impeller.

It is known that fan members with impellers having blades curved forwards with respect to the rotation direction of the impeller may have a smaller impeller and worm plate for obtaining a certain pressure needed for a certain air flow rate in a ventilating arrangement of this type. Due to the requirement of determined outer dimensions of said casing it has therefore been considered to be both most suitable and also necessary to use such fan members in ventilating arrangements of this type. However, the present inventor has realized that the air pressure in the air flow paths in a casing of a ventilating arrangement of this type will rather easy reach the levels desired as a consequence of the arrangement of the rotary heat exchanger and other obstacles, such as filters or other restrictions, in the flow paths, so that a worm plate of an impeller having blades curved backwards may be given restricted dimensions while still obtaining the pressure needed.

The use of such a fan member in a ventilating arrangement of this type has several advantages. The efficiency of a fan member with an impeller having blades curved backwards is considerably higher than for a fan member with an impeller having blades curved forwards. This means that a motor for rotating the impeller having a lower rated power may be used for obtaining a certain flow rate of air through the arrangement. Thus, costs may be saved on one hand in the form of lower production costs for said motor and on the other by a lower consumption of power of the motor in operation. Another advantage is that a fan member with an impeller having blades curved backwards results in a lower level of noise both from the casing of the arrangement and in the air conducting channels connected to the casing.

According to an embodiment of the invention said at least one fan member has a worm plate surrounding said impeller in the direction transversely to the axes of rotation of the impeller, and the relationship of one hand the maximum width between opposing worm walls along a line extending in a direction being substantially in parallel with the exhaust direction of the worm and on the other the outer diameter of the impeller is 1.3-1.5, advantageously < 1.5, preferably < 1.45 and most preferably < 1.4. This relationship is for a conventional such fan member having an impeller with blades curved backwards in the order of 1.6. However, the present inventor has realized that the pressure required in the air conducting paths in a casing of a ventilating arrangement of this type may be obtained for considerably smaller dimensions of the worm plate, which makes it possible to use an impeller with a required outer diameter in spite of the restricted space available inside said casing. It has surprisingly been found that a relationship < 1.4 may in fact be used, which means that it will for instance be possible to arrange an impeller having an outer diameter of 190 mm instead of an expected maximum outer diameter of 160 mm of such an impeller.

According to another embodiment of the invention said at least one fan member has a worm plate surrounding said impeller in the direction transversely to the axis of rotation of the impeller, and the relationship of on one hand the largest distance between opposing walls of the worm in a direction substantially perpendicular to the exhaust direction of the worm and on the other the outer diameter of said impeller is 1.5-1.8, advantageously <1.7 and preferably <1.6. It has been found that these relationship values being lower than for traditionally fan members with impellers having blades curved backwards will be sufficient for obtaining the air pressure required in said air flow paths inside said casing.

According to another embodiment of the invention both said first and second fan members have an impeller with blades curved backwards with respect to the rotation direction of the impeller. It is preferred to have both fan members with such impellers, since this will result in a maximum reduction of costs for the motors of the impellers and the power consumption thereof as well as a maximum reduction of the noise delivered by the operation of the fan members in the ventilating arrangement and air conducting pipes connected thereto, although it is within the scope of the invention to have only one of said fan members provided with such an impeller.

According to another embodiment of the invention said two fan members and said rotary heat exchanger are arranged with the axes of rotation thereof extending substantially in parallel with each other. This way of arranging the fan members and the rotary heat exchanger inside said casing makes it possible to obtain flow paths inside said casing with less pressure fall in said air flow paths as a consequence of less restrictions of the cross-section over the extensions thereof inside said casing. This means that the power of the fan members may be reduced for obtaining a determined air flow rate.

According to another embodiment of the invention said fan members and rotary heat exchanger have their axes of rotation extending substantially in parallel with said side of the casing provided with said at least four openings, which has turned out to allow creation of air flow paths through said casing with a minimum of restrictions resulting in the advantages just mentioned.

According to another embodiment of the invention a filter element is arranged in each of said air flow paths inside the casing upstream the rotary heat exchanger, and the filter element in said second path for filtering exhaust air has a larger cross-section transversely to said path than the filter element for supply air. It is suitable to use such filter elements for protecting the rotary heat exchanger against all types of dusts, insects and the like, the deposition of which in the rotary heat exchanger would dramatically reduce the efficiency thereof and also increase the air flow resistance of the rotary heat exchanger. The arrangement of such a larger filter element in the exhaust air flow path results in a higher air flow rate in said second path than in said first path, so that a certain negative pressure may be obtained inside the rooms of the buildings, which is desired in countries with a cold climate, where the outdoor temperature usually is lower than the indoor temperature.

According to another embodiment of the invention said filter element for exhaust air is arranged in front of the rotary heat exchanger with a main large surface thereof extending substantially perpendicularly to the axis of rotation of the rotary heat exchanger, which is a suitable location of said filter element for giving this said larger cross-section aimed at.

According to another embodiment of the invention the filter element for the supply air is arranged inside said first air flow path with a main large side thereof extending substantially in parallel with the axis of rotation of said rotary heat exchanger.

According to another embodiment of the invention said casing has means configured to secure the casing on a structural element of a said building with said side thereof on the top, which for the reasons mentioned in the introduction mostly is a preferred orientation of said casing.

According to another embodiment of the invention said casing has the following dimension: height 650-750 mm, preferably about 700 mm, width 550-650 mm, preferably about 600 mm, and depth 350-450 mm, preferably about 410 mm, assuming that said side with said at least four openings is considered to be the top of the casing. These are typical dimensions of such a ventilating arrangement.

According to another embodiment of the invention each fan member has a conventional AC motor as said motor, and the specific fan power of the arrangement, i.e. the power of the motors of the fan members of the arrangement/amount of air transported per second, is for an air flow of 55 l/sec below 2.5 kW/m³/sec, especially about 2 kW/m³/sec, calculated for an external pressure outside said casing of 100 Pascal. Thus, a specific fan power being much lower than specific fan powers of arrangements of this type using conventional AC motors may be obtained thanks to the use of impellers having blades curved backwards in an arrangement of the type defined in the introduction. Such specific fan power is for corresponding arrangements already known at least 50 %, and for the most 100-300 % higher. This means a considerable saving of energy when using the arrangement according to the invention instead of such arrangements already known. Specific fan powers in the range of 2 kW/m³/sec have for small units so far only been obtainable by using EC-motors with an integrated electronic commutation, which are much more expensive than conventional AC motors and also are associated with some other drawbacks.

According to another embodiment of the invention an arrangement with a casing having said dimensions has a motor of said at least one fan member with a rated power <80 W, advantageously 40-70 W and preferably 50-60 W. For ventilating arrangements of this type already known motors having rated powers of 130-160 W have been used, which means that the motor reduction with respect to rated power made possible in a ventilating arrangement according to the present invention is remarkable, and this may be achieved thanks to the lower specific fan power obtainable in an arrangement according to the invention.

According to another embodiment of the invention an arrangement with a casing of said dimensions has an impeller of said at least one fan member with an outer diameter of 160-200 mm, preferably 170-190 mm. Such a large impeller may in a ventilating arrangement according to the invention be used in a casing having said dimensions in spite of the use of an impeller having blades curved backwards.

According to another embodiment of the invention a ventilating arrangement having a casing with said dimensions has a rotary heat exchanger with an outer diameter of 250-350 mm, preferably > 300 mm.

Further advantages as well as advantageous features of the invention will appear from the following description.

### BRIEF DESCRIPTION OF THE DRAWINGS

With reference to the appended drawings, below follows a specific description of a ventilating arrangement according to an embodiment of the invention.

### In the drawings:

- Fig 1: is a schematic view illustrating how an arrangement according to an embodiment of the invention is arranged in a building for ventilating the rooms of the building while obtaining heat transfer between exhaust air and supply air,
- Fig 2: is a simplified perspective view of the ventilating arrangement according to said embodiment of the present invention with one wall of the casing thereof removed for showing the interior of the casing,
- Fig 3: is a front view of the casing shown in fig 2,
- Fig 4: is a simplified view of one of the fan members in the ventilating arrangement according to the embodiment of the invention compared with a traditional fan member of this type, and
- Fig 5: is a perspective view of the fan member shown in fig 4.

### DETAILED DESCRIPTION OF AN EMBODIMENT OF THE INVENTION

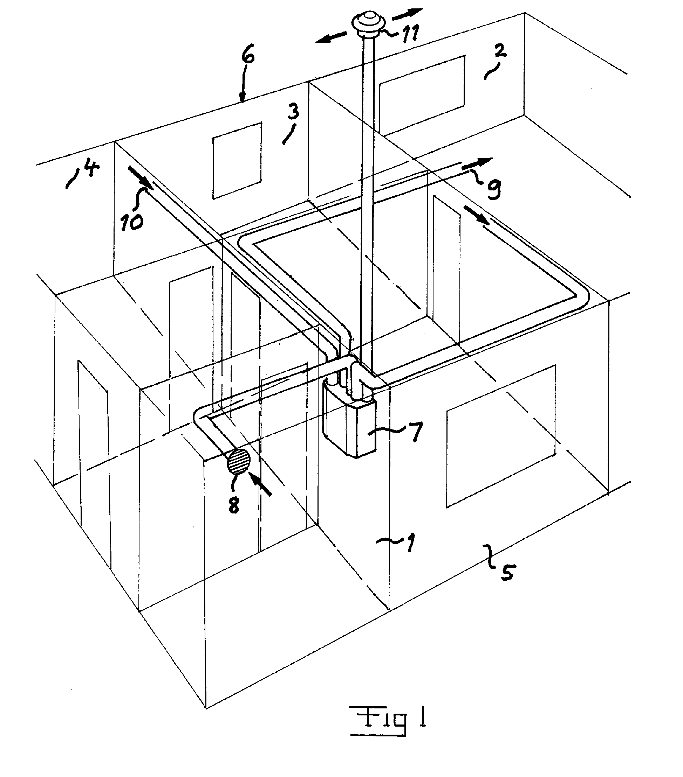

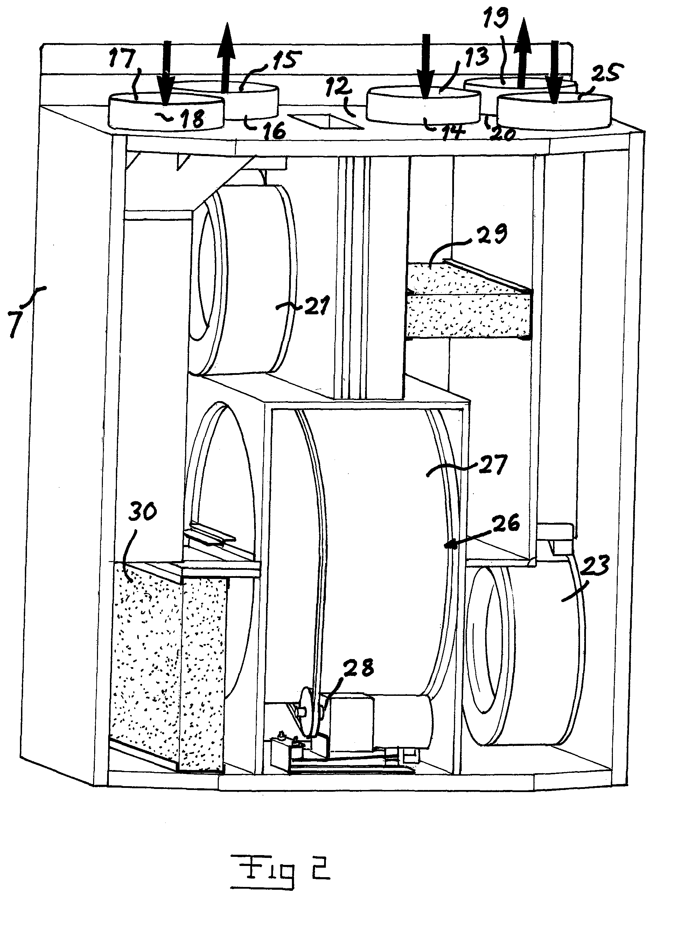

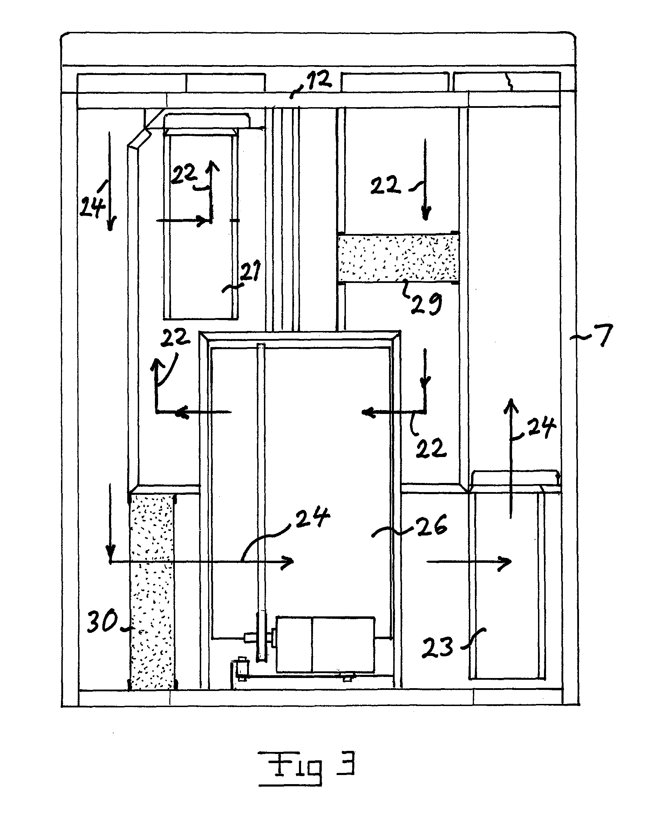

Fig 1 schematically shows a ventilating arrangement according to the present invention for ventilating one or more rooms 1-5 of a building 6. The arrangement comprises a casing 7 having at least four, in this case five, openings arranged on the same side thereof for connecting conduits for conducting supply air from the exterior 8 to the casing 7 before conducting it further into said room and exhaust air from the rooms (see 10) to the casing before being exhausted to the exterior (see 11). The construction and the function of a ventilating arrangement of this type according to an embodiment of the invention will now be explained while referring to both fig 2 and 3.

The casing has one a side 12 thereof:
- a first inlet opening 13 with means 14 for connecting to a conduit for supply air from the exterior of the building,
- a first outlet opening 15 with means 16 for connecting to a conduit for conducting supply air entering the casing through the first inlet opening 13 to said one or more rooms of the building,
- a second inlet opening 17 with means 18 for connecting to a conduit for conducting exhaust air from said one or more rooms, and
- a second outlet opening 19 with means 20 for connecting to a conduit for conducting exhaust air entering the casing through said second inlet opening 17 to the exterior of the building. A first fan member 21 having an impeller with blades curved backwards with respect to the rotation direction of the impeller and a motor for rotation thereof is arranged to create a flow of air in a first path 22 inside the casing from the first inlet 13 to the first outlet 15. A second fan member 23 having an impeller with blades curved backwards with respect to the rotation direction of the impeller and a motor for rotation thereof is arranged to create a flow of air in a second path 24 inside the casing from the second inlet 17 to the second outlet 19. It is also indicated how the casing may have a fifth opening 25 for exhaust air from a kitchen fan for mixing this exhaust air with the other exhaust air in said second path.

The casing also contains a rotary heat exchanger 26 arranged in said first and second paths 22, 24 for conducting air flows in these two paths through separate rooms of the rotary heat exchanger for heat transfer from the warmer of the two air flows to the colder one. The construction and the function of such a rotary heat exchanger is well known and will not be described in detail here. The rotary heat exchanger has a body 27 with a shape of a circular cylinder made of or containing filling material with a high capacity to absorb and emit heat energy. This body is driven by a motor 28 with a gear to rotate slowly. Partition walls separate the casing and seals with respect to each end surface of the body 26, so that half of the body is arranged in said first flow path and the other half of the body in said second flow path. It may here be referred to EP 1 662 211 A1.

A filter element 29, 30 is arranged in the first and second air flow path, respectively, upstream the rotary heat exchanger 26 for protection thereof against depositions of dust, insects and the like.

The axes of rotation of the impellers of the fan members are substantially in parallel with the axes of rotation of the body 27 of the rotary heat exchanger and these axes of rotation are substantially in parallel with said side 12 of the casing.

The filter element 30 in the second flow path is arranged in front of the rotary heat exchanger with a main large surface thereof extending substantially perpendicularly to the axis of rotation of the rotary heat exchanger and has a larger cross-section transversely to said path than the filter element 29 for supply air.

This way of mutual arrangement of the fan members and the rotary heat exchanger makes it possible to obtain a high efficiency of the ventilating arrangement. The casing 7 has here the following dimensions: height 700 mm, width 600 mm and depth 410 mm, assuming that the side with said at least four openings is considered to be the top of the casing. The body 27 of the rotary heat exchanger may then suitably have a diameter of about 320 mm.

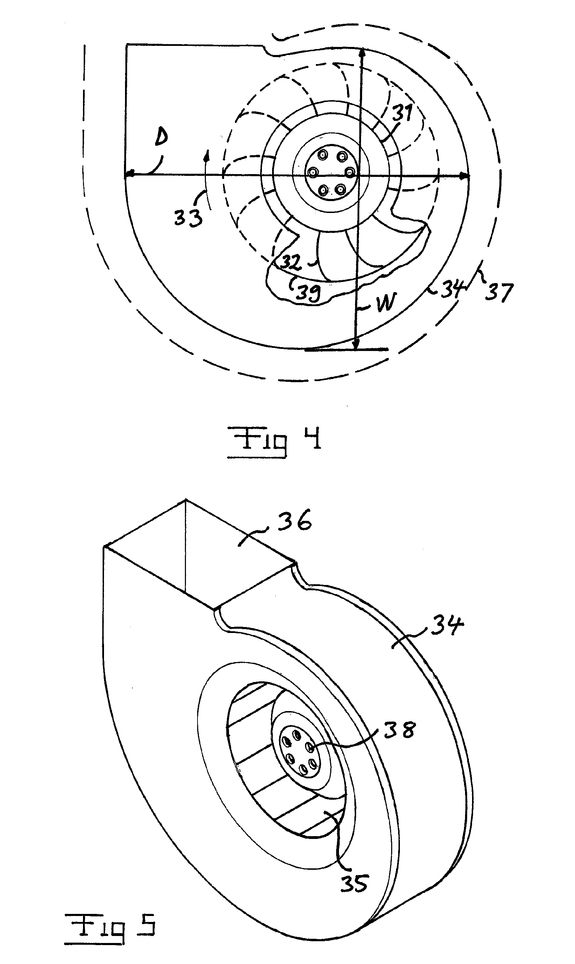

The fan members have here impellers with a diameter of 190 mm, and the construction thereof will now be explained while referring to figs 4 and 5. The impeller 31 of each fan member has blades 32 curved backwards with respect to the rotation direction (arrow 33) of the impeller. The circle 39 is only there in fig 4 for indicating the outer diameter of the fan member formed by the outer tips of the blades 32. A so-called worm or worm plate 34 surrounds the impeller and has a first opening 35 to the inner of the impeller for suction of air inside said worm plate by rotation of the impeller and a second exhaust opening 36. The dimensions of a conventional worm plate of a fan member with an impeller of this type and dimension are indicated in fig 4 by the dashed line 37. Thus, it is shown how the dimensions of the worm plate 34 are reduced with respect to a conventional fan member of this type. The pressure needed to be obtained in the first and second air flow path in the casing will in spite of this be obtainable thanks to the arrangement of the rotary heat exchanger, the filters and the like in said paths. The maximum width W between opposing worm walls along a line extending in a direction being substantially in parallel with the exhaust direction of the worm is here about 256 mm compared to about 306 mm for a conventional such fan member. It appears that the maximum width is defined as the distance in said exhaust direction between the most upstream worm wall part and the most downstream worm wall part. Furthermore, the largest distance D between opposing walls of the worm in a direction substantially perpendicular to the exhaust direction of the worm is about 300 mm compared to about 370 mm for a conventional such fan member.

The motor 38 is a conventional AC motor with a rated power of 55 W, which should be compared with AC motors with a rated power of 130-160 W in ventilating arrangements of this type already known for the same air flow rate through the casing and same size of the casing. This reduction of rated power is due to the higher efficiency of a fan member with an impeller with blades curved backwards and less restrictions in the first and second air flow paths in the casing, which results in a reduced specific fan power allowing this reduction of rated power. This result in less costs for the motor and less stays required therefore. It also results in a considerably lower consumption of power for the fan members and the entire ventilating arrangement. Accordingly, a very low specific fan power may be obtained without use of any expensive EC-motors.

The invention is of course not in any way restricted to the embodiment described above, but many possibilities to modifications thereof would be apparent to a person with ordinary skill in the art without departing from the basic idea of the invention as defined in the appended claims.

As already stated, the casing may be configured to be arranged with said side with the openings directed otherwise than shown.

The fan members may have other locations inside the casing than those shown, although these locations are advantageous.

A building and even an apartment thereof may be provided with more than one said ventilating arrangement.

It is pointed out that the invention is not restricted to the use of AC motors for the fan members, but a reduction of the specific fan power of the arrangement may be obtained for an arrangement having any type of motors, even EC-motors, by using an impeller having blades curved backwards. This means that the invention may for instance be applied for reducing the specific fan power from about 2 kW/m³/sec to about 1 kW/m³/sec for an arrangement having EC-motors in the fan members.

## Claims

1. An arrangement for ventilating one or more rooms (1-5) of a building (6), said arrangement comprises a casing (7) having at least four openings arranged on the same side (12) thereof:
• a first inlet opening (13) with means (14) for connecting to a conduit for supply air from the exterior of the building,
• a first outlet opening (15) with means (16) for connecting to a conduit for conducting supply air entering the casing through said first inlet opening (13) to said one or more rooms of the building,
• a second inlet opening (17) with means (18) for connecting to a conduit for conducting exhaust air from said one or more rooms, and
• a second outlet opening (19) with means (20) for connecting to a conduit for conducting exhaust air entering the casing through said second inlet opening (17) to the exterior of the building, the casing further including:
• a first fan member (21) having an impeller (31) and a motor (38) for rotation thereof arranged to create a flow of air in a first path (22) inside the casing from said first inlet opening (13) to said first outlet opening (15),
• a second fan member (23) having an impeller (31) and a motor (38) for rotation thereof arranged to create a flow of air in a second path (24) inside the casing from said second inlet opening (17) to said second outlet opening (19), and
• a rotary heat exchanger (26) arranged in said first and second pathes for conducting air flows in said two paths through separate rooms of the rotary heat exchanger for heat transfer from the warmer of the two air flows to the colder one,
***characterized* in that** the impeller (31) of at least one of said fan members (21, 23) has blades (32) curved backwards with respect to the rotation direction (33) of the impeller.

2. An arrangement according to claim 1, ***characterized* in that** said at least one fan member (21, 23) has a worm plate (34) surrounding said impeller (31) in the direction transversely to the axis of rotation of the impeller, and that the relationship of on one hand the maximum width (W) between opposing worm walls along a line extending in a direction being substantially in parallel with the exhaust direction of the worm and on the other the outer diameter of the impeller is 1.3-1.5, advantageously <1.5, preferably <1.45 and most preferred <1.4.

3. An arrangement according to claim 1 or 2, ***characterized* in that** said at least one fan member (21, 23) has a worm plate (34) surrounding said impeller (31) in the direction transversely to the axis of rotation of the impeller, and that the relationship of on one hand the largest distance (D) between opposing walls of the worm in a direction substantially perpendicular to the exhaust direction of the worm and on the other the outer diameter of said impeller is 1.5-1.8, advantageously <1.7 and preferably <1.6.

4. An arrangement according to any of the preceding claims, ***characterized* in that** both said first and second fan members (21, 23) have an impeller (31) with blades (32) curved backwards with respect to the rotation direction (33) of the impeller.

5. An arrangement according to any of the preceding claims, ***characterized* in that** said two fan members (21, 23) and said rotary heat exchanger (26) are arranged with the axes of rotation thereof extending substantially in parallel with each other.

6. An arrangement according to claim 5, ***characterized* in that** said fan members (21, 23) and rotary heat exchanger (26) have their axes of rotation extending substantially in parallel with said side (12) of the casing provided with said at least four openings.

7. An arrangement according to any of the preceding claims, ***characterized* in that** a filter element (29, 30) is arranged in each of said air flow paths (22, 24) inside the casing (7) upstream the rotary heat exchanger (26), and that the filter element (30) in said second path (24) for filtering exhaust air has a larger cross-section transversely to said path than the filter element (29) for supply air.

8. An arrangement according to claim 7, ***characterized* in that** said filter element (30) for the exhaust air is arranged in front of the rotary heat exchanger (26) with a main large surface thereof extending substantially perpendicularly to the axis of rotation of the rotary heat exchanger.

9. An arrangement according to claim 7 or 8, ***characterized* in that** the filter (29) element for the supply air is arranged inside said first air flow path (22) with a main large side thereof extending substantially in parallel with the axis of rotation of said rotary heat exchanger (26).

10. An arrangement according to any of the preceding claims, ***characterized* in that** said casing (7) has means configured to secure the casing on a structural element of a said building with said side (12) thereof on the top.

11. An arrangement according to any of the preceding claims, ***characterized* in that** said (7) casing has the following dimension: height 650-750 mm, preferably about 700 mm, width 550-650 mm, preferably about 600 mm, and depth 350-450 mm, preferably about 410 mm, assuming that said side (12) with said at least four openings is considered to be the top of the casing.

12. An arrangement according to claim 11, ***characterized* in that** each fan member has a conventional AC motor as said motor, and that the specific fan power of the arrangement, i.e. the power of the motors of the fan members of the arrangement/amount of air transported per sec, is for an air flow of 55 l/sec below 2.5 kW/m³sec, especially about 2 kW/m³/sec, calculated for an external pressure outside said casing of 100 Pascal.

13. An arrangement according to claim 11 or 12, ***characterized* in that** the motor (38) of said at least one fan member (21, 23) has a rated power <80 W, advantageously 40-70 W and preferably 50-60 W.

14. An arrangement according to any of claims 11-13, ***characterized* in that** the impeller (31) of said at least one fan member (21, 23) has an outer diameter of 160-200 mm, preferably 170-190 mm.

15. An arrangement according to any of claims 11-14, ***characterized* in that** the rotary heat exchanger (26) has an outer diameter of 250-350 mm, preferably >300 mm.
